(19) Europäisches Patentamt
European Patent Office
Office européen des brevets

(11) **EP 3 667 578 A1**

(12) **EUROPEAN PATENT APPLICATION**

(43) Date of publication:
**17.06.2020 Bulletin 2020/25**

(51) Int Cl.:
**G06Q 10/06** (2012.01)  **G06Q 50/04** (2012.01)
**G05B 13/00** (2006.01)  **G05B 19/00** (2006.01)
**G05B 23/00** (2006.01)  **G05B 19/418** (2006.01)

(21) Application number: **18212348.9**

(22) Date of filing: **13.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **LOLEO, Andrea**
**16156 Genova (IT)**

• **CORSINI, Giorgio**
**16148 Genova (IT)**
• **VENTURI, Giovanni**
**16136 Genova (IT)**
• **MONTALDO, Ernesto**
**16129 Genova (IT)**

(74) Representative: **Maier, Daniel Oliver**
**Siemens AG**
**Postfach 22 16 34**
**80506 München (DE)**

(54) **SYSTEM AND METHOD FOR AUTOMATIC OPTIMIZATION OF A MANUFACTURING BOP (BILL-OF-PROCESS) FOR A PRODUCTION PROCESS**

(57)     System and method for automatically optimizing a manufacturing BoP for a production of a product, wherein the BoP defines operations to be carried out to produce said product, the method comprising the steps of:

a) automatically collecting (501) manufacturing as-built data and engineering data with respect to the production of said product;

b) automatically feeding (502) the collected data into a single digital twin data graph (402), wherein the digital twin data graph is a data model of the product configured for modelling at the same time both the manufacturing as-built data model of the product and the engineering data model of the product;

c) automatically correlating (503) the data of the digital twin data graph using a rule-mining procedure, wherein sequences of operations are transformed by the system (401) into sets of unary predicates of pairs of predecessor and follower operations, and wherein continuous KPI values are transformed into discrete KPI values, wherein one discrete KPI value is associated to each set of unary predicates, wherein said rule-mining procedure is applied to the obtained sets of unary predicates in order to determine rules between the unary predicates;

d) automatically determining (504) an operation sequence constraint from the previous correlation, wherein said rules are ranked and wherein rules ranking higher than a predefined ranking threshold are automatically se-lected (401) and outputted as a sequence constraint for the manufacturing BoP; and

e) optimizing (505) the manufacturing BoP by adding to the latter said operation sequence constraint.

FIG 4

**Description**

The invention relates to a system and a method for automatically optimizing a manufacturing Bill-of-Process (M-BoP) for a production process.

The emergence of mass customization through which manufacturing companies are at the same time targeting global market demands and individual customer needs introduces new forms of complexities for production systems. Moreover, manufacturing companies have to enlarge their products portfolio to address more market niches and to satisfy wider set of customers.

From an engineering point of view, production engineers must plan in a Bill-of-Process (hereafter "BoP") the operations that are carried out for enabling the production of each of the possible products, and in a more detailed "M-BoP". A BoP refers usually to a product and contains components and subassemblies and a recipe of operations and resources needed to build the product. An M-BoP is usually associated to a plant (and might be called a "plant BoP") and consists of stations and cells with a list of operations that can be performed at a particular station. This capability bridges the connection between the product centric view of building a product - the BoP - and the plant centric view of building a product - the plant BoP (M-BoP). In the following, we will use the wording "BoP" for both "product BoP" and "plant BoP" unless otherwise specified. Since there can be inter-dependencies between operations, an important aspect of the BoP is to constrain the sequence in which the operations have to be performed, referred to as sequence constraints. Furthermore, there may also be other constraints, such as a special tooling is needed for an operation (equipment constraints), or an operator with special skills is required.

When production orders are executed in a specific production system, the sequence of operations for one product is called the production routing of the product. A single product can have multiple routings depending on the execution context (site, number of products, etc.). Naturally, the routing needs to conform to the constraints in the BoP and M-BoP.

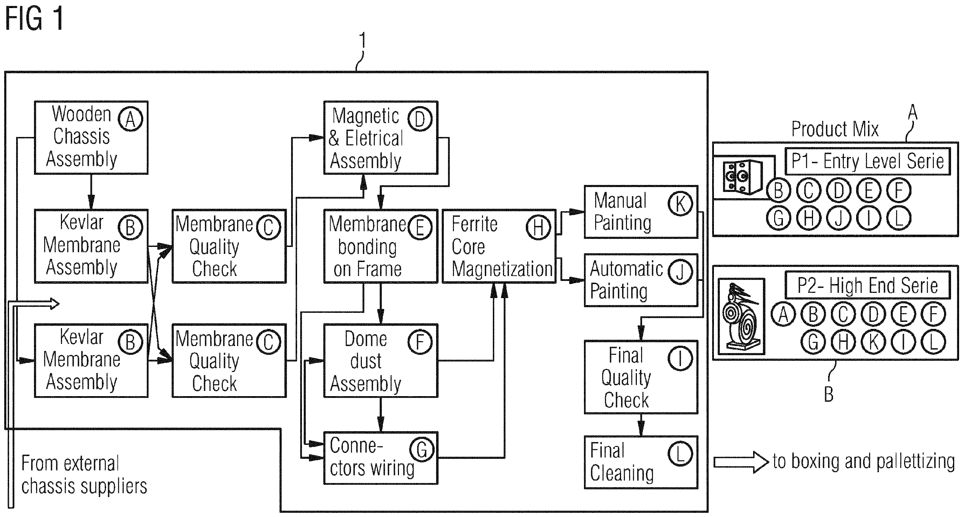

On the other hand, manufacturing executions generate vast amounts of so-called as-built data, which consists of information regarding executed routings, materials, personnel, and related Key Performance Indicators (KPIs) involved in the manufacturing process of a product or related to the manufactured product. An illustration is presented in Figure 1, wherein a manufacture of a speaker is schematically shown. For said speaker, there are two product configurations, namely P1 and P2, which both need a different set of operations to be carried out, said set of operations being defined in respective BoP. Additionally, there might be sequence and equipment constraints which limit the number of routings. In this context, the problem that the production engineer is facing is to determine the most efficient routing given a specific production environment. Indeed, due to several degrees of freedom that are left for the execution of the manufacturing process, several routings are possible.

Additionally, a wise choice of the best routing for producing a product is complicated by:

- heterogeneous data sources for manufacturing (MOM software systems) and engineering software systems that need to be aligned;
- a context of multi-relational data with defined semantics (classes, properties, relation types);
- usually large-scale data, due to number operations / and product configuration variants.

The choice of the routing for producing a product is typically based on best practices and domain expert knowledge, wherein a production engineer decides for each new product the sequence of operations to be carried out, sometimes based on different trials, which is usually not enough efficient in a context wherein product portfolio tends to enlarge.

An objective of the present invention is therefore to provide a method and a system for automatic optimization of a manufacturing BoP in order to make the production process more efficient.

This objective is achieved according to the present invention by a method and system for automatic optimization of a manufacturing BoP according to the object of the independent claims. Dependent claims present further advantages of the invention.

The present invention proposes in particular an analysis of the most efficient routing strategy with respect to one or multiple KPIs. Preferentially, an automated or semi-automated closed-loop feedback, based on automatically collected as-built data about historic execution records, continuously provides updates of BoP constraints and routings recommendation in order to decrease the degrees of freedom, ensuring therefore an optimal execution of the production processes and a continuous improvement of said production processes.

The present invention proposes in particular a method for automatically, and preferentially continuously, optimizing a manufacturing BoP for a production of a product, wherein the BoP defines operations to be carried out to produce said product, the method comprising:

- Automatically, and preferentially continuously, collecting, by means of a system, manufacturing as-built data and engineering data with respect to the production of said product, wherein the manufacturing as-built data are defined by a manufacturing as-built data model and the engineering data are defined by an engineering data model;

- Feeding, preferentially continuously feeding, by means of the system, the collected data into a single digital twin data graph in order to enable to determine multiple relations between the collected data, wherein the digital twin data graph is a data model of the product configured for modelling at the same time both the manufacturing as-built data model of the product and the engineering data model of the product;
- Automatically correlating, by means of said system, the data of the digital twin data graph using a rule-mining procedure, wherein sequences of operations are transformed by the system into sets of unary predicates comprising at least one predicate representing a sequence of two directly successive operations, i.e. representing a pair of predecessor and follower operations, and wherein continuous KPI values are transformed by said system into discrete KPI values, wherein at least one discrete KPI value is associated to each set of unary predicates, said associated discrete KPI value representing the KPI value of the sequence of operations transformed in said set of unary predicates, the system applying then said rule-mining procedure to the obtained sets of unary predicates in order to determine rules, i.e. relationships, between the unary predicates;
- Automatically determining an operation sequence constraint from the correlation,

    wherein a frequency of each rule is determined, and rules characterized by a frequency higher than a predefined threshold are selected and added to a set of frequent rules,
    wherein rules of said set of frequent rules resulting from known operation constraints are removed from said set,
    wherein the rules of the set of frequent rules are ranked according to a set of predefined evaluation criterion,
    wherein said set of predefined evaluation criterion comprises notably at least a criterion based on said discrete KPI value, and
    wherein rules of said set having a ranking higher than a predefined ranking are automatically selected by the system and outputted by the latter as a sequence constraint for the manufacturing BoP;

- Optimizing, preferentially continuously optimizing, and/or automatically optimizing, the manufacturing BoP by adding to the latter said operation sequence constraint;
- Producing the product according to the optimized BoP.

The present invention advantageously enables an automated update of an existing BoP with operation sequence constraints from as-built data of an existing product configuration.

The present invention proposes also a system for carrying out the claimed method, said system comprising a processor, a memory, a connection to a network for collecting the engineering data and the manufacturing as-built data and providing the optimized manufacturing BoP to production equipment.

Preferred but not exclusive embodiments of the invention will now be described with reference to the accompanying drawings, which depict in:

Figure 1    schematically an example of routings and constraints in a speaker manufacturing system;

Figure 2    schematically an example of execution with known BoP;

Figure 3    schematically a new product variant in connection with the example of Figure 2;

Figure 4    schematically a technical architecture of recommendation system components according to a preferred embodiment of the invention;

Figure 5    schematic flowchart representing a method according to the invention.

The present invention lays in the technical field of manufacturing execution systems (MES) and/or manufacturing operation management systems (MOM). As defined by the Manufacturing Enterprise Solutions Association (MESA International), a MES/MOM system "is a dynamic information system that drives effective execution of manufacturing operations", by managing "production operations from point of order release into manufacturing to point of product delivery into finished goods" and by providing "mission critical information about production activities to others across the organization and supply chain via bi-directional communication." In addition, the ISA-95 standard describes in detail the meaningful resources that a manufacturing process has to consider in order to optimize and streamline the production process. The focus is in particular on the management of materials, equipment, tools and personnel. Typically, a MES system connects, monitors, and controls complex manufacturing production processes and data flows within an enterprise. One of the main goals of a MES system is to ensure effective execution of the manufacturing operations and improve production output.

The functions that MES/MOM systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking. For example, the Siemens Corp. offers a broad range of MES/MOM products under its SIMATIC IT® product family. MES- or MOM systems, like SIMATIC IT, manage and monitor the production of a vast diversity of products.

Figure 1 schematically describes examples of routings and constraints in a speaker manufacturing system 1, wherein from external chassis suppliers, two different products are manufactured, namely an entry level series of speakers (product configuration P1) and a high-end series of speakers (product configuration P2). Different sequences of production processes A-E enable the manufacture of different series of speakers, wherein the sequence used for manufacturing respectively the entry level series of speakers is given in Table A and the sequence used for manufacturing the high-end series of speakers is given in Table B.

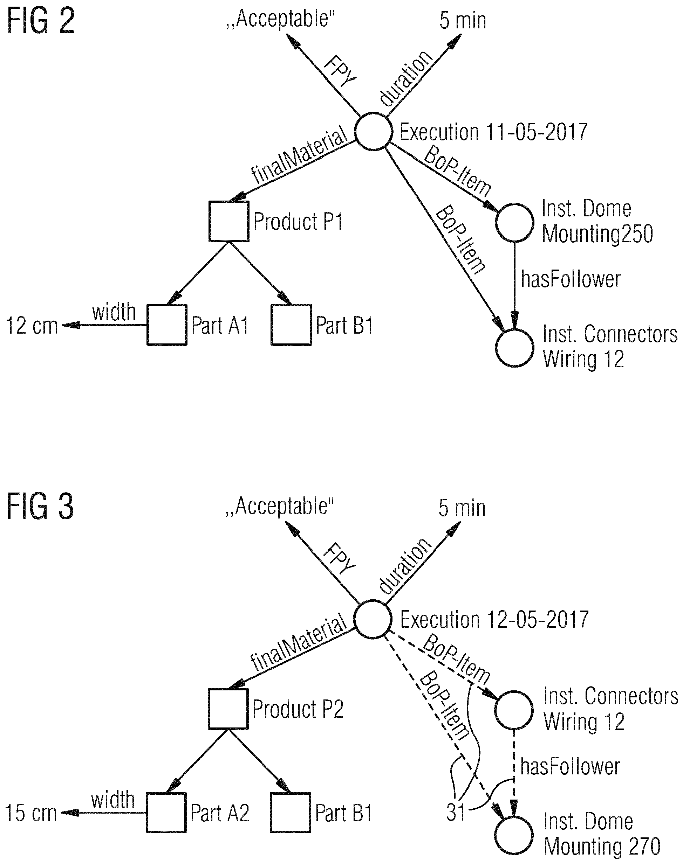

Figure 2 shows a graph representing a multi-relational context of manufacturing execution data. In particular, an execution instance 11-05-2017 orders the production of a product P1, which is made of parts A1 and B1. The execution instance further requires the execution of two processes in the BoP, namely welding 250 (Inst. Dome Mounting 250) and grinding 12 (Inst. Connectors Wiring 12), where the grinding 12 process was performed after the welding 250 process, due to a required sequence constraint. Other attributes of the execution instance can be quality performance indicators, such as First Pass Yield (FPY) or the duration of the complete execution.

Figure 3 shows a graph representing a multi-relational context of manufacturing execution data for a new product configuration P2. For said new product configuration P2, the operations (BoP items) and their sequential order may not be known, as schematically represented by the dashed arrows 31. The technical solutions proposed by the present invention comprises:

a) an automated integration and synchronization of engineering and manufacturing as-built data using a representation format for digital twin data, preferentially using data of a MOM system modeled in a Digital Twin system and configured for generating meaningful KPIs;
b) an automatic determination of sequence constraints for existing M-BoP based on historic as-built data.

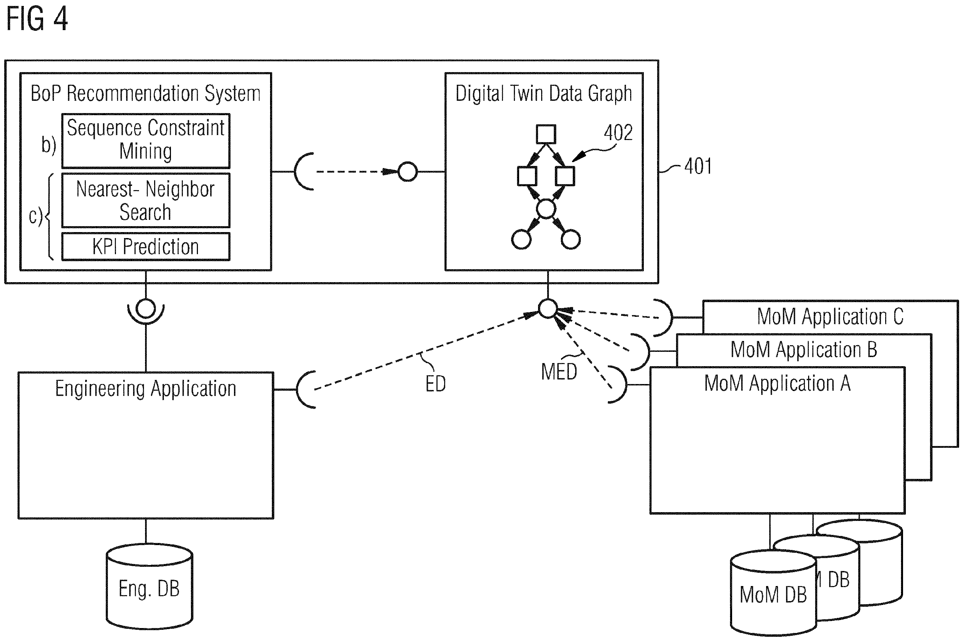

Figure 4 shows a more detailed description of a preferred embodiment of the system 401 according to the invention. In particular, the system 401 is configured for automatically collecting product engineering data ED and manufacturing as-built data MED for a produced product, and for automatically synchronizing said product engineering data with said manufacturing execution data. Preferentially, the system creates or uses a digital twin of the product, i.e. a digital representation of the product, for holding said product engineering data and said manufacturing execution data. Optionally, said digital twin might be in the form of a digital twin data graph 402 of the product wherein manufacturing and engineering data models are unified in a semantic data model.

Typical entities comprised within the digital twin data graph 402 according to the invention are for instance:

i) a list of operations in the M-BoP; and/or
ii) material positions in the BoM; and/or
iii) a product family; and/or
iv) past executed sequences; and/or
v) as-built data (e.g. personnel, tools, timing, consumed materials etc.);
vi) KPIs about past executions, notably based on as-built data.

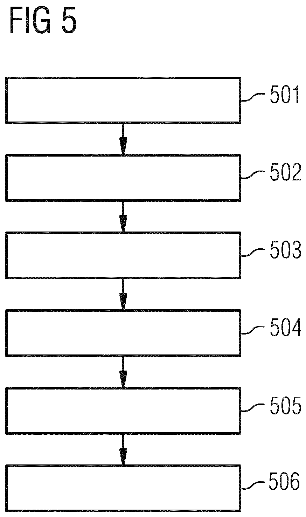

Figure 5 presents a schematic flowchart representing the different steps of the method for automatically optimizing a manufacturing BoP according to the invention.

At step 501, according to the present invention and as shown in Figure 4 and 5, the system 401 collects manufacturing as-built data MED, e.g. as built data of MoM application, and engineering data ED, e.g. BoP and/or BoM data of engineering applications.

At step 502, the system 401 feeds the collected as-build data and engineering data into the digital twin data graph, using then said digital twin data graph preferentially as a single source of information for all as-built data over different sites, areas, applications.

At step 503, the system 401 is further configured for automatically correlating the as-built data, i.e. historic manufacturing data like past production orders that have been executed, alongside with their corresponding context, e.g. which products, which routings, which resources (materials, equipment, personnel) and associated KPIs - typically stored in a Manufacturing Intelligence data warehouse, in order to find the most efficient routings with respect to the performance of a production site.

At step 504, the system automatically determines sequence constraints from the correlation of the as-built data by applying rule-mining techniques to said as-built data in order to quantify an influence of different routings (i.e. due to degrees of freedom) of the same product configuration on KPI (e.g. quality) values.

Preferentially, and contrary to known techniques which are based on purely sequence mining approaches that find frequent (sub-) sequences in as-built routing data, the present system is configured for:

- modelling the routings and engineering data in a multi-relational graph, like said digital twin data graph;
- transforming sequences of operations into a set of unary predicates of pairs of predecessor and follower operations, wherein a unary predicate is defined as a formal proposition or function that depends only on one variable, and that associates to said variable either true or false (or pass or reject), wherein the result, i.e. true or false, depends on the value of said variable.;
- transforming continuous KPI values into discrete KPI values used as variables for unary predicates; and
- applying a rule mining to the resulting set of predicates.

Once the sequence constraint is determined, the system automatically optimizes 505 the manufacturing BoP by adding to the latter said sequence constraint, and then automatically triggers a production 506 of the product according to the optimized BoP.

In order to better illustrate the method according to the invention, a simple example is taken wherein as-built data of three executions comprises the records as shown in Table 1 and Table 2, where a quality KPI is discretized into the domain [Pass, Reject], and wherein the different operations comprised within routings 1 and 2 of Table 1 are detailed in Table 2, wherein the sequence in which the operations are carried out is given by the steps 1-3 (see Table 2) in the chronological order:

**Table 1 - Execution records with routing, product and quality context**

| ExecutionID | Routing | ProductConfiguration | Quality |
|---|---|---|---|
| 1 | 1 | P1 | Reject |
| 2 | 2 | P1 | Pass |
| 3 | 2 | P1 | Pass |

**Table 2 - Detailed routing context with sequences of steps**

| Routing | Step | Operation |
|---|---|---|
| 1 | 1 | Woofer Mounting |
| 1 | 2 | Dome Mounting |
| 1 | 3 | Connectors Wiring |
| 2 | 1 | Woofer Mounting |
| 2 | 2 | Connectors Wiring |
| 2 | 3 | Dome Mounting |

Every record in the historic as-built data is transformed into a set of unary predicates that can be used for rule mining. The sequences of steps are processed as pairs of predecessor and follower operations:
$\forall$ i: Step(i, i+1) (x) := i-Before-i+1 (x)

In the example data above, the first execution (x=1) record is therefore transformed into a set of predicates P(x) with

```
P(x=1) = {Execution(x), ProductConfigurationP1(x), Quali-
tyReject(x), WooferMounting_Before_DomeMounting(x), Dome-
Mounting_Before_ConnectorsWiring(x)}
```

While the second execution (x=2) is transformed into another set of predicates P(x) given by:

```
P(x=2)  =  {Execution(x), ProductConfigurationP1(x), Quali-
tyPass(x), WooferMounting_Before_ConnectorsWiring(x), Connec-
torsWiring_Before_DomeMounting(x)}
```

Afterwards, a rule mining technique is applied to the obtained set of unary predicates, wherein the set of unary predicates and any existing sequence constraints is used as input to a frequent rule mining procedure configured for outputting top-k rules, i.e. an association of predicates which result in high value for the KPI, wherein said high value is determined with respect to a predefined threshold (e.g. a value higher than said threshold is defined as a high value) or with respect to a fixed value (e.g. a value "true" is considered as a high value with respect to the fixed value "true", while the value "false" will be considered as a low value). The frequent rule mining procedure is a data mining procedure configured for determining from the set of predicates (used as input data) one or several rules (i.e. relationships) between one or more of the predicates of a same set and how frequently each of the found rules occur within the different sets of predicates. In other words, the rule mining technique of the present invention is in particular an association rule learning which enables to determine, by analyzing each set of predicates, how frequently the association of some predicate(s) gives rise to a specific (set of) value(s) of the KPI.

In particular, step 503 further comprises for each set of unary predicates that has been created (there is one set of unary predicates for each execution record):

- checking if a determined rule can be qualified as a frequent rule and in the affirmative recording said rule in a set of frequent rules. In particular, a determined rule is qualified as a frequent rule if the frequency at which the system determines and obtains this rule is higher than a predefined threshold obtained from a statistical analysis of the frequency at which each of the determined rules are obtained by the system;
- removing from said set of frequent rules, any rule that results from already known sequence constraints (i.e. there is no need to update a BOP for such rules);

said step 103 further comprising

- ranking the rules of the obtained set of frequent rules based on evaluation criterion e.g. based on a KPI discrete value that might be associated to each set of unary predicates with respect to the production operations considered; and
- selecting the top-k ranked rules, i.e. the rules of the set of frequent rules which are associated with a KPI discrete value which is higher than a predefined threshold ranking value, and automatically outputting the latter as a sequence constraint for the M-BoP, optionally after validation by an operator, and updating the M-BoP accordingly.

For instance, with respect to the previous example provided by Table 1 and 2, top-k ranked rules that would be of interest for determining sequence constraints would be:

If ProductConfigurationP1(x) and DomeMounting_Before_Conn-ec-torsWiring(x) → QualityReject(x);
If ProductConfigurationP1(x) and ConnectorsWiring_Before_DomeMounting(x) → QualityPass(x).

Of course, in the present example, both rules have an accuracy of 100 % regarding the as-built data of Table 1 and Table 2, which would not be the case in a real manufacturing database of as-built data. From each of the selected top-k ranked rules, the system automatically sets a new sequence constraint in the M-BoP. According to the present example, such a new sequence constraint would specify that ConnectorsWiring should be executed before DomeMounting when product P1 is manufactured.

According to the present invention, the system comprises a data architecture configured for representing the as-built manufacturing data and engineering data in a multi-relational graph. Advantageously, said data architecture enables a multidimensional mining procedure for rules that encodes and quantifies pairs of operation sequences as sequence constraints for automatically optimizing the BoP.

The present invention may further comprise an automated recommendation service for production engineering using machine learning on as-built data, wherein said automated recommendation service automatically sends an optimized BoP to an operator or a production system. Preferentially, the system automatically optimized the BoP by integrating to the latter sequence constraints created from said selected top-k ranked rules so that manufacturing faults due to non-optimal sequencing of operations are prevented.

**Claims**

1. Method for automatically optimizing a manufacturing BoP for a production of a product, wherein the BoP defines operations to be carried out to produce said product, the method comprising the steps of:

   a) automatically collecting (501), by means of a system (401), manufacturing as-built data and engineering data with respect to the production of said product;

   b) automatically feeding (502), by means of the system (401), the collected data into a single digital twin data graph (402) in order to enable to determine multiple relations between the collected data, wherein the digital twin data graph is a data model of the product configured for modelling at the same time both the manufacturing as-built data model of the product and the engineering data model of the product;

   c) automatically correlating (503), by means of said system (401), the data of the digital twin data graph using a rule-mining procedure, wherein sequences of operations are transformed by the system (401) into sets of unary predicates of pairs of predecessor and follower operations, and wherein continuous KPI values are transformed by said system into discrete KPI values, wherein one discrete KPI value is associated to each set of unary predicates, the system (401) applying then said rule-mining procedure to the obtained sets of unary predicates in order to determine rules between the unary predicates;

   d) automatically determining (504) an operation sequence constraint from the correlation, wherein the rules determined by the system are ranked according to a set of predefined evaluation criteria, and wherein rules ranking higher than a predefined ranking threshold are automatically selected by the system (401) and outputted by the latter as a sequence constraint for the manufacturing BoP; and

   e) optimizing (505) the manufacturing BoP by adding to the latter said operation sequence constraint;

   f) producing (506) the product according to the optimized BoP.

2. The method according to claims 1, wherein rules of said set of frequent rules resulting from known operation constraints are automatically removed from said set by the system (401).

3. The method according to claim 2, wherein said set of predefined evaluation criteria comprises notably at least a criterion based on said discrete KPI value.

4. The method according to claim 2 or 3, wherein said set of predefined evaluation criteria comprises a criterion based on the frequency at which a rule is determined by the system with respect to all rules that have been determined by the system.

5. The method according to claim 4, wherein a frequency of each rule is determined, and rules **characterized by** a frequency higher than a predefined threshold are selected and added to a set of frequent rules.

6. The method according to any of the preceding claims, wherein each rule of said set of frequent rules is associated to the discrete KPI value associated to the set of unary predicates from which the considered rule has been determined, and wherein said discrete KPI value is compared to a value of said predefined ranking threshold, wherein only rules of said set of frequent rules having a discrete KPI value higher or equal to said predefined ranking threshold are automatically selected.

7. A system (401) for carrying out the method according to one of the claims 1 to 6, said system (401) comprising a processor, a memory, a connection to a network for collecting the engineering data and the manufacturing as-built data and providing the optimized manufacturing BoP to production equipment.

8. The system (401) according to claim 7, automatically controlling production equipment according to the optimized BoP.

FIG 1

FIG 2

„Acceptable"          5 min

FPY    duration

finalMaterial    Execution 11-05-2017

BoP-Item

Product P1

BoP-Item

Inst. Dome
Mounting250

width

12 cm ◄———  Part A1    Part B1

hasFollower

Inst. Connectors
Wiring 12

FIG 3

„Acceptable"          5 min

FPY    duration

finalMaterial    Execution 12-05-2017

BoP-Item

Product P2

BoP-Item

Inst. Connectors
Wiring 12

width

15 cm ◄———  Part A2    Part B1

31

hasFollower

Inst. Dome
Mounting 270

# FIG 4

BoP Recommendation System

b) Sequence Constraint Mining

c) Nearest- Neighbor Search

KPI Prediction

Digital Twin Data Graph

402

401

Engineering Application

ED

MED

MoM Application C

MoM Application B

MoM Application A

Eng. DB

MoM DB

M DB

EP 3 667 578 A1

FIG 5

Europäisches
Patentamt

European
Patent Office

Office européen
des brevets

# EUROPEAN SEARCH REPORT

**Application Number**

EP 18 21 2348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/041378 A1 (SIEMENS AG [DE]) 8 March 2018 (2018-03-08) * page 9; figures 2,7-8 * | 1-8 | INV. G06Q10/06 G06Q50/04 G05B13/00 |
| X | WO 2018/174940 A1 (SIEMENS AG [DE]) 27 September 2018 (2018-09-27) * paragraphs [0034] - [0035]; claim 2; figures 1-3 * | 1-8 | G05B19/00 G05B23/00 G05B19/418 |
| X | WO 2018/030939 A1 (TOMOLOGIC AB [SE]) 15 February 2018 (2018-02-15) * page 10, line 3 - line 28; figures 1-3 * | 1-8 | |

**TECHNICAL FIELDS SEARCHED (IPC)**

G06Q
G05B

The present search report has been drawn up for all claims

| Place of search | Date of completion of the search | Examiner |
|---|---|---|
| Munich | 20 February 2019 | Diaz Calvo, Sonia |

EPO FORM 1503 03.82 (P04C01)

**ANNEX TO THE EUROPEAN SEARCH REPORT
ON EUROPEAN PATENT APPLICATION NO.**

EP 18 21 2348

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2019

| Patent document cited in search report | | Publication date | Patent family member(s) | Publication date |
|---|---|---|---|---|
| WO 2018041378 | A1 | 08-03-2018 | NONE | |
| WO 2018174940 | A1 | 27-09-2018 | NONE | |
| WO 2018030939 | A1 | 15-02-2018 | NONE | |

EPO FORM P0459

For more details about this annex : see Official Journal of the European Patent Office, No. 12/82